# FASCICULE DE BREVET EUROPEEN

(11) **EP 0 288 365 B1**
(45) Date de publication et mention de la délivrance du brevet: **24.02.1993**
(21) Numéro de dépôt: 88400917.6
(22) Date de dépôt: 15.04.1988
(51) Int. Cl.: G02B 27/00

(54) **Viseur clair holographique montable sur casque**
Holographisches Head-up-Display zur Anbringung auf einem Helm
Helmet-mounted holographic head-up display

(30) Priorité: 22.04.1987 FR 8705702
(43) Date de publication de la demande: 26.10.1988
(73) Titulaire: THOMSON-CSF, 75008 Paris (FR)
(72) Inventeur: Cheysson, Françoise, F-75008 Paris (FR); Migozzi, Jean-Blaise, F-75008 Paris (FR)
(74) Mandataire: Courtellemont, Alain

(56) Documents cités:
- EP-A- 0 007 039
- EP-A- 0 009 332
- EP-A- 0 216 692
- WO-A-87/01211
- US-A- 3 940 204
- PROCEEDINGS OF NATIONAL AEROSPACE AND ELECTRONICS CONFERENCE, Dayton, Ohio,1981, vol 3, pages 261-1268; R.L. BERRY et al.: "The lantirn wide field-of-view raster head-up display"
- P. HARIHARAN: "Optical Holograms", édition 2, 13 mai 1986, pages 146-159, Cambridge University Press, Cambridge, GB; "Computer-genarated Holograms"

## Description

La présente invention concerne un viseur clair holographique permettant de constituer un collimateur de pilotage tête haute montable sur casque. Le collimateur permet de présenter à un pilote une image renvoyée à l'infini et superposée à la vision du paysage extérieur. Cette image lumineuse peut être, au choix, une information de pilotage, un réticule de visée ou une image synthétique provenant d'un générateur ou d'un capteur annexe, infrarouge par exemple.

En général, l'image lumineuse à collimater est d'abord formée sur l'écran d'un tube cathodique ou d'une matrice de cristaux liquides, puis elle est reprise par une première optique, conventionnelle, dite optique relais qui en forme une image intermédiaire. L'image intermédiaire est collimatée à l'aide d'un système optique partiellement réfléchissant qui peut se composer d'un lame plane et d'une lame sphérique utilisée sur l'axe. Les deux lames sont traitées afin de réfléchir partiellement les rayons provenant de l'écran tout en transmettant partiellement ceux issus du paysage. Il en résulte une perte d'information sur les deux voies, celle de l'imageur et celle de la vision du paysage extérieur. De plus, les traitements utilisés sont tels que des images parasites, par exemple des réflexions sur la face arrière de la lame plane, subsistent et peuvent gêner l'observateur. Par ailleurs, ces collimateurs ont un champ optique limité et sont trop encombrants pour être montés sur un casque.

Selon des techniques plus performantes, on utilise le montage hors d'axe et des traitements holographiques sur les lames permettant d'obtenir la collimation avec un rendement photométrique amélioré par diffraction ainsi qu'une transmission améliorée de la voie du paysage. De telles solutions sont décrites dans la revue DISPLAYS d'Avril 1983 article de J.R. BANBURY intitulé "Wide field of view head-up-displays", notamment la solution notamment de la figure 8C page 95 qui montre une architecture tête haute équipée d'un miroir de repli et d'une optique relais dont les dimensions peuvent être conciliables avec l'équipement du fait que l'oeil de l'observateur est placé suffisamment loin de l'ensemble de combinaison et de collimation constitué par la lame plane et la lame sphérique. La pupille d'observation se trouve alors située dans un tel système proche du centre du miroir sphérique. L'optique relais sert pour former l'image intermédiaire ainsi que pour corriger les aberrations des lames holographiques. Ce système, du fait de la position de la pupille (au centre du miroir sphérique) ne peut être parfaitement optimisé pour les traitements anti-reflet sur la lame plane. Il présente donc des images parasites importantes. De plus, l'utilisation d'une optique relais est toujours pénalisante pour le poids et l'encombrement du viseur.

Le but de l'invention est de remédier à ces inconvénients en réalisant un viseur clair holographique du type précité, à champ important sans optique de reprise, montable sur un casque, et qui offre un très bon bilan photométrique avec un taux d'images parasites minimisé. Son encombrement réduit en facilite l'implantation sur casque ou en cabine.

Ceci a été obtenu en réalisant un viseur clair holographique tel que défini par la revendication 1 ; ce viseur ressemble au dispositif tête haute décrit dans le document EP-A-9332 dans la mesure où, dans les deux cas, un générateur d'image fournit une image à un ensemble optique de collimation et de combinaison groupant une lame plane et une lame sphérique comportant chacune un hologramme et où la lame plane est située entre la lame sphérique et la position d'observation. Mais, dans le document considéré, la voie image arrive directement du générateur d'image sur la lame sphérique et de ce fait crée un masque pour la vision du paysage par l'observateur situé de l'autre côté des lames plane et sphérique par rapport au générateur d'image ; un tel masque ne présente pas d'inconvénient lorsque le viseur est monté dans un cockpit, par contre il n'est pas tolérable pour un viseur monté sur un casque. Cet inconvénient est évité dans le viseur selon l'invention en positionnant différemment le générateur d'image par rapport aux lames plate et sphérique.

Il est à noter de plus que, pour la réalisation qui va être décrite, il est produit des hologrammes par calcul numérique en utilisant un calculateur et qu'une telle technique est connue, par exemple par les pages 146-159 de l'édition 2 d'un livre de P. HARIHARAN intitulé "Optical Holograms" paru à la Cambridge University Presse le 13 mai 1986. De même dans la réalisation qui va être décrite, la technique qui consiste à utiliser une lame sphérique pour réduire des aberrations est une technique connue comme il ressort en particulier des lignes 57-62 colonne 1 et des lignes 48-54 colonne 3 du document US-A-3 940 204.

Les particularités et avantages de l'invention apparaîtront dans la description qui suit donnée à titre d'exemple, à l'aide des figures annexées qui représentent :
- Fig.1, un schéma simplifié d'un viseur clair conforme à l'invention ;
- Fig.2, un schéma de réalisation de l'ensemble optique collimateur et combineur ;
- Fig.2A, un schéma de détail de la lame plane holographique de la figure 2 ;
- Fig.3, un schéma illustrant le trajet optique de collimation ;
- Fig.4, un schéma d'une utilisation du viseur monté sur un casque.

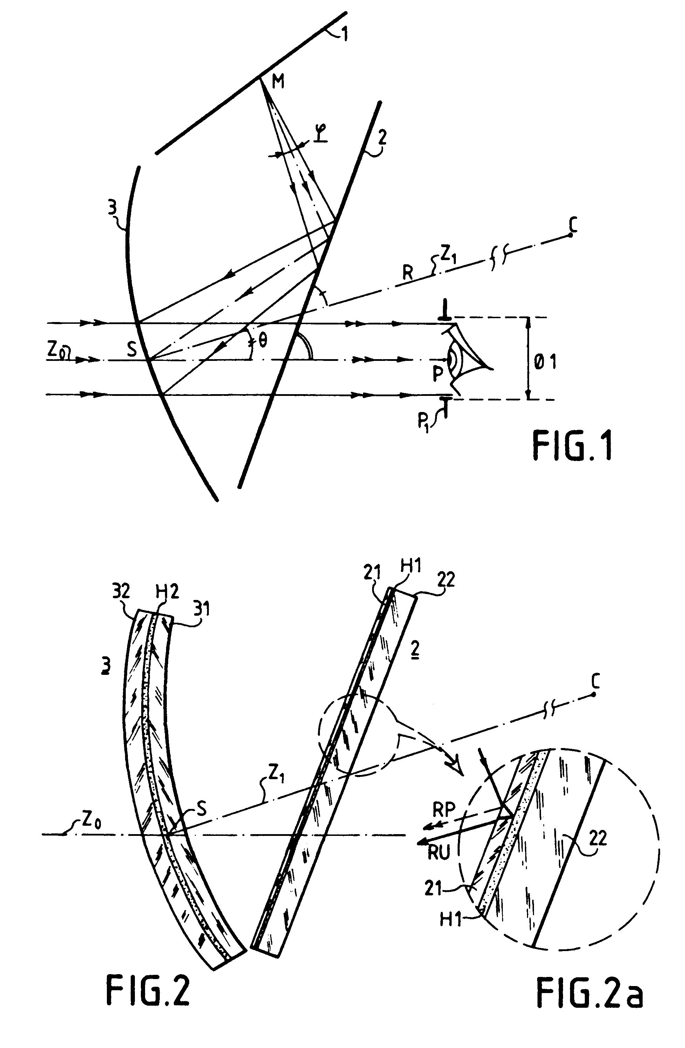

En se reportant à la figure 1 le viseur est constitué par un générateur d'image lumineuse représenté de manière simplifié par son écran 1. Ce générateur est le plus souvent constitué à l'aide d'un tube à rayons cathodiques ou d'une matrice de cristaux liquides et l'écran sur lequel est formée l'image lumineuse à collimater est généralement plan comme représenté.

L'écran 1 se trouve placé au foyer d'un miroir holographique 3 réalisé sur support sphérique et utilisé hors axe. L'image lumineuse est renvoyée sur ce miroir à l'aide d'une lame plane holographique 2 formant miroir de renvoi. Cet ensemble de collimation est déterminé de manière à former, comme représenté, à partir de chaque point M de l'image lumineuse pour le faisceau de champ représenté, un faisceau sortant de rayons parallèles passant par une pupille P1 d'observation qui se trouve située à une distance SP du sommet du miroir sphérique 3 sensiblement égale à sa distance focale, c'est-à-dire à R/2, R étant le rayon de courbure de ce miroir. Le point C représente le centre de courbure, l'axe Z1 l'axe central de ce miroir, l'axe Z0 la direction de renvoi correspondant à la direction normale de vision de l'observateur, et l'angle ϑ entre ces deux axes représente l'écart angulaire hors axe d'exploitation. La pupille P1 a un diamètre ⌀1.

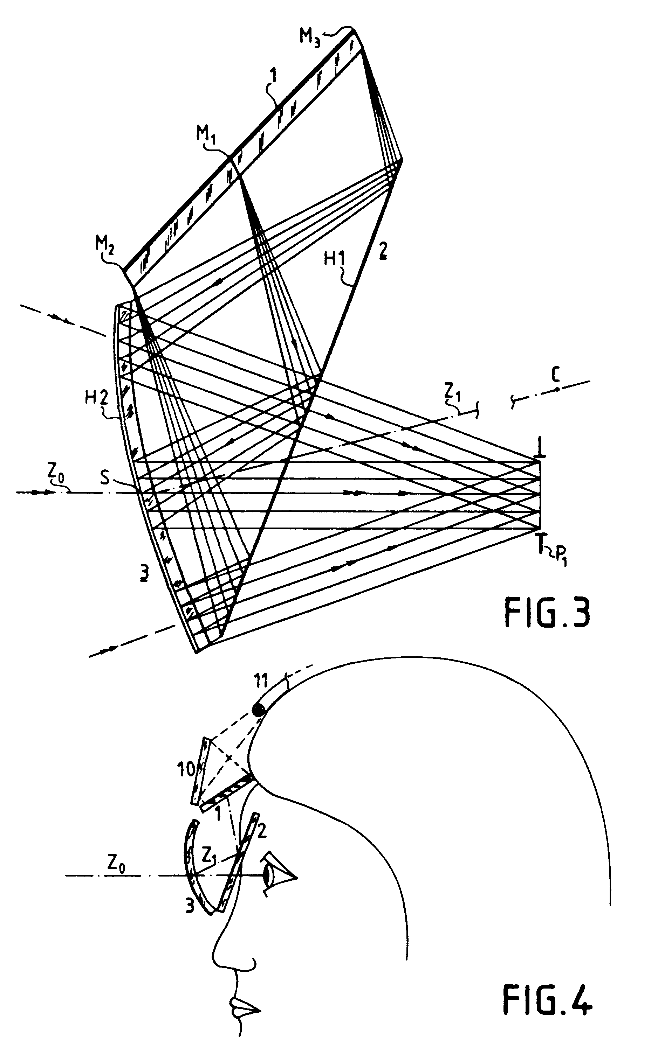

Le trajet optique de collimation est représenté plus en détail à la figure 3 pour trois points M1,M2,M3 de l'image lumineuse, M1 étant le point central sur l'axe et M2,M3 des points extrèmes. On voit que les faisceaux collimatés convergent dans la zone pupillaire P1. Le trajet comporte d'abord une réflexion sur le premier hologramme H1 porté par la lame plane 2. Le rayonnement est renvoyé par diffraction vers le miroir sphérique 3 où un deuxième hologramme H2 produit la collimation. Les rayons collimatés présentent alors une incidence telle qu'ils traversent l'hologramme H1 sans être diffractés. Le rayonnement provenant de l'extérieur traverse successivement les hologrammes H2 et H1 portés par les lames 3 et 2. La pupille P1, ou boîte à oeil, représente la zone dans laquelle peut se déplacer l'oeil ; son diamètre peut être, par exemple, de l'ordre de 15 millimètres.

L'utilisation hors axe de l'hologramme H2 sur support sphérique 3 introduit une variation d'incidence sur la lame plane 2 pour les rayons avant et après réflexion sur l'hologramme H2. Ceci permet d'utiliser la lame plane 2 avec l'hologramme 1 de manière à réfléchir sélectivement les rayons lumineux en fonction de leur incidence. La lame plane 2 réfléchit quasi-intégralement le rayonnement issu de l'écran 1 et le transmet quasi-intégralement après réflexion par l'hologramme H2. Le hors d'axe permet de séparer angulairement les rayons à réfléchir de ceux à transmettre. La lame plane holographique 2 permet un gain photométrique élevé pour la transmission sur la voie de l'imageur. Ce gain est encore accru par l'utilisation de l'hologramme H2 sur le support sphérique 3 qui permet également d'atteindre des rendements de 100% en réflexion sur la voie de l'imageur. Globalement, l'utilisation des deux hologrammes H1 et H2 permet d'obtenir une transmission voisine de 100 % sur la voie du paysage pour tout le spectre excepté la longueur d'onde (ou la bande étroite) d'efficacité des hologrammes en réflexion correspondant à la bande d'émission de l'imageur 1, et également de l'ordre de 100% sur la voie de l'imageur pour la longueur d'onde (ou le spectre étroit de longueur d'onde) sélectionnée correspondant au rayonnement émis par ce générateur d'image.

La figure 2 représente plus en détail un mode de réalisation de l'ensemble optique de combinaison et de collimation, c'est-à-dire des éléments 2 et 3. Chacun d'eux se décompose en un hologramme, H1 et H2 respectivement, pris en sandwich entre deux lames transparentes, par exemple en verre. L'hologramme H1 est compris entre les lames planes 21 et 22, l'hologramme H2 entre les lames sphériques de même courbure 31 et 32.

La figure 2A relative à un détail grossi de la lame 2 met en évidence une particularité du montage permettant d'accroître le gain photométrique par réduction du taux d'images parasites. La lame 22 est la lame support de l'hologramme H1 et la lame 21 constitue une lame de scellement. Cette dernière est choisie très fine, par exemple un dixième de millimètre, en sorte que le rayonnement utile RU diffracté par réflexion sur l'hologramme H1 est très proche du rayonnement parasite RP renvoyé par la face avant de la lame de scellement 21. Dans le cas d'une lame traitée partiellement transparente conventionnelle, le rayonnement utile RU est réfléchi par la face avant et le rayonnement parasite RP est produit par réflexion sur la face arrière non traitée de la lame plane. Ce rayonnement RP se trouve assez écarté de la réflexion principale RU, d'autant plus que la lame plane est d'épaisseur importante. En outre, si l'on désigne par K le facteur de réflexion de la face traitée on peut montrer que le taux T d'images parasites est sensiblement égal à 1,6K pour une lame plane traitée et égal à K dans le cas de la lame holographique 2. On gagne donc un facteur 1,6 en lumière parasite, ce qui est très important pour ces viseurs.

De plus, l'oeil étant sensiblement situé dans le plan focal de l'hologramme H2, les incidences des rayons que la lame plane doit réfléchir sont peu différentes les unes des autres. En effet, les rayons issus de l'imageur 1 doivent arriver collimatés sur la pupille P1 de l'oeil. Cette pupille étant de petite dimension ⌀ 1 par rapport aux dimensions globales du montage et située au foyer image de l'hologramme H2, cela signifie que les rayons doivent arriver presque parallèles sur l'hologramme H2 et donc aussi sur l'hologramme H1 de la lame 2. Ceci permet de réaliser un traitement anti-reflet de très bonne qualité ainsi que sur la lame de scellement 21 de la lame 2. On peut donc diminuer encore le taux d'images parasites avec ce traitement anti-reflet résultant de l'emplacement particulier de la pupille P1.

L'utilisation de la lame courbe holographique 3 permet de corriger les aberrations du système dans la réflexion holographique. Pour obtenir ce résultat, on utilise un hologramme H2 enregistré avec deux ondes complexes dont une au moins est produite à l'aide d'un hologramme numérique. Ce dernier est calculé au préalable à l'aide d'un ordinateur et intégré ensuite sur le banc d'enregistrement.

Le principe de l'holographie numérique consiste à avoir une expression mathématique avec des coefficients ou paramètres, variables pour représenter la formule optique. En fonction du choix des paramètres, on calcule les aberrations présentées par cette formule optique. Ensuite les valeurs des paramètres sont modifiées, et consécutivement la formule optique en sorte de diminuer les aberrations par déformations de front d'ondes. On obtient ainsi progressivement, à l'aide de calculs numériques, une formule optique optimisée avec des aberrations minimisées ou très faibles. Ces calculs sont effectués en tenant compte du champ total utile désiré pour le système et en définitive permettent de définir une optique holographique 3 qui permet de se dispenser d'une optique relais de reprise d'image. L'holographie numérique utilisée permet d'accroître le champ, la résolution, et diminuer l'encombrement.

Il y a lieu de remarquer également l'intérêt de l'utilisation d'un hors axe au niveau ergonomique. En effet, l'inclinaison de la lame plane 2 par rapport à l'axe Z0 peut être accrue et supérieure à la valeur de 45° généralement utilisée dans les solutions conventionnelles à lames traitées partiellement transparentes. L'architecture proposée est donc moins agressive et devient plus aisément implantable sur un casque.

Pour une autre utilisation envisagée, comme viseur tête haute pour hélicoptère, on peut conserver l'inclinaison de 45° de la lame plane, ce qui permet alors de repousser l'écran 1 vers l'arrière et accroître le champ du système sans que le tube vienne rencontrer la verrière du cokpit.

A titre d'exemple de réalisation les angles indiqués peuvent avoir les valeurs suivantes : hors d'axe ϑ de l'ordre de 15° ; angle d'inclinaison de la lame 2 sur l'axe Z0 correspondant à la direction normale de vision, de l'ordre de 70° ; angle entre l'axe Z1 et la lame 2 de 55° environ ; rayon R de 160 mm. Le champ d'exploitation de la vision collimatée est circulaire et peut atteindre plus de 40° circulaire.

Le viseur clair holographique décrit présente donc de multiples avantages qui sont le rendement photométrique très important, le taux d'images parasites réduit, le champ et la résolution augmentés,l'encombrement réduit par suppression de l'optique de reprise, l'ergonomie améliorée par l'inclinaison relevée de la lame plane.

Un exemple d'application est donné à la figure 4 pour un montage sur casque, en utilisant une matrice de cristaux liquides 1 éclairée par l'intermédiaire d'une source lumineuse (non figurée, extérieure ou portée par le casque). Un faisceau de de fibres 11 transmet le rayonnement lumineux de la source vers l'arrière de la matrice, après réflexion sur un miroir réfléchissant 10.

Ce montage peut être transposé en cabine d'hélicoptère avec éventuellement, une inclinaison de la lame plane 2 plus grande pour faciliter l'implantation d'un imageur de gros encombrement.

## Revendications

1. Viseur clair holographique présentant un axe moyen (MSP) de centre de champ, comportant un générateur d'image lumineuse à collimater (1), un ensemble optique (2, 3) de collimation et de combinaison, groupant une lame plane (2) portant un hologramme (H1) et une lame sphérique (3) portant un hologramme (H2), pour voir l'image collimatée superposée au paysage, la lame plane étant disposée entre la lame sphérique et la position d'observation (P), la lame sphérique ayant un axe central (Z1) décalé d'un angle dit de hors axe par rapport à l'axe moyen (MSP) et ayant son hologramme (H2) qui produit la collimation à l'infini de l'image, le rayonnement de la voie paysage arrivant dans l'ensemble optique (2, 3) directement sur la lame sphérique (3) pour être transmis par la lame sphérique puis par la lame plane vers la position d'observation, caractérisé en ce que, pour le champ d'exploitation envisagé, la pupille d'observation (P1) est à une distance du sommet (S) du miroir sphérique, que constitue la lame sphérique, sensiblement égale à la focale (R/2) du miroir sphérique et en ce que le rayonnement de la voie image arrive dans l'ensemble optique (2, 3) directement sur la lame plane (2) pour être réfléchi par la lame plane puis par la lame sphérique puis transmis par la lame plane vers la position d'observation.

2. Viseur selon la revendication 1, caractérisé en ce que la lame plane holographique (2) comporte un hologramme (H1) entre une lame support (22) et une lame de scellement (21), cette dernière étant de faible épaisseur par rapport à la résolution spatiale du générateur, pour obtenir une réflexion parasite à l'avant de cette lame de scellement très proche du rayonnement utile (RU) diffracté par l'hologramme (H1).

3. Viseur selon la revendication 1 ou 2, caractérisé en ce que le miroir sphérique holographique (3) a un rayon de courbure (R) de l'ordre de 160 millimètres et produit la collimation dans une zone pupillaire (P1) de diamètre 15 mm environ.

4. Viseur selon l'une quelconque des revendications précédentes, caractérisé en ce que le hors axe du miroir sphérique est de 15° environ.

5. Viseur selon la revendication 3 ou l'ensemble des revendications 3 et 4, caractérisé en ce que ledit champ d'exploitation correspondant à la vision de l'image collimatée est circulaire et de ± 20° environ.

## Claims

1. Clear holographic sight having a mean centre-of-field axis (MSP), including a generator (1) of a luminous image to be collimated, an optical collimating and combining assembly (2, 3), grouping together a plane plate (2) carrying a hologram (H1) and a spherical plate (3) carrying a hologram (H2), in order to see the collimated image superimposed on the scenery, the plane plate being arranged between the spherical plate and the observation position (P), the spherical plate having a central axis (Z1) offset by an angle called the off-axis angle, with respect to the mean axis (MSP) and having its hologram (H2) which produces the collimation of the image at infinity, the radiation of the background path arriving in the optical assembly (2, 3) directly onto the spherical plate (3) in order to be transmitted by the spherical plate and then by the plane plate towards the observation position, characterised in that, for the field of utilisation envisaged, the observation pupil (P1) is at a distance from the centre (S) of the spherical mirror, which the spherical plate constitutes, substantially equal to the focal distance (R/2) of the spherical mirror, and in that the radiation of the image path arrives in the optical assembly (2, 3) directly onto the plane plate (2) in order to be reflected by the plane plate, then by the spherical plate and then transmitted by the plane plate to the observation position.

2. Sight according to Claim 1, characterised in that the holographic plane plate (2) includes a hologram (H1) between a support plate (22) and a sealing plate (21), the latter being of small thickness with respect to the spatial resolution of the generator, in order to obtain a parasitic reflection in front of this sealing plate very close to the useful radiation (UR) diffracted by the hologram (H1).

3. Sight according to Claim 1 or 2, characterised in that the holographic spherical mirror (3) has a radius of curvature (R) of the order of 160 millimetres and produces collimation in a pupillary zone (P1) of approximately 15 mm in diameter.

4. Sight according to one of the preceding claims, characterised in that the off-axis angle of the spherical mirror is approximately 15°.

5. Sight according to Claim 3 or the whole of Claims 3 and 4, characterised in that the said field of utilisation corresponding to the vision of the collimated image is circular and of approximately ± 20°.

## Patentansprüche

1. Holographisches Head-Up-Display mit einer mittleren Achse (MSP) der Feldmitte, mit einem Generator (1) für ein zu kollimierendes Leuchtbild, einer Optikbaugruppe (2, 3) zum Kollimieren und Kombinieren, die eine ein Hologramm (H1) tragende ebene Platte (2) und eine ein Hologramm (H2) tragende sphärische Platte (3) enthält, um das der Landschaft überlagerte kollimierte Bild zu sehen, wobei die ebene Platte zwischen der sphärischen Platte und der Beobachtungsposition (P) angeordnet ist und die sphärische Platte eine zentrale Achse (Z1) aufweist, die um einen Winkel außerhalb der mittleren Achse (MSP) versetzt ist und ihr Hologramm (H2) aufweist, das das Bild im Unendlichen kollimiert, wobei die Strahlung des Landschaftskanals direkt auf der sphärischen Platte (3) der optischen Baugruppe (2, 3) ankommt, damit sie von der sphärischen Platte und dann von der ebenen Platte zur Beobachtungsposition übertragen wird, dadurch gekennzeichnet, daß bei dem beabsichtigten Anwendungsfeld die Beobachtungspupille (P1) in einem Abstand vom Scheitelpunkt (S) des die sphärische Platte bildenden sphärischen Spiegels liegt, der angenähert gleich der Brennweite (R/2) des sphärischen Spiegels ist, und daß die Strahlung des Bildkanals in der optischen Baugruppe (2, 3) direkt auf der ebenen Platte (2) ankommt, damit sie durch die ebene Platte und dann durch die sphärische Platte reflektiert und durch die ebene Platte zur Beobachtungsposition übertragen wird.

2. Head-Up-Display nach Anspruch 1, dadurch gekennzeichnet, daß die holographische ebene Platte (2) ein Hologramm (H1) zwischen einer Trägerplatte (22) und einer Einschließungsplatte (21) enthält, wobei letztere bezüglich der räumlichen Auflösung des Generators eine geringe Dicke hat, damit vor dieser Einschließungsplatte eine Störreflexion erhalten wird, die sehr nahe der durch das Hologramm (H1) gebeugten Nutzstrahlung (RU) liegt.

3. Head-Up-Display nach Anspruch 1 oder 2, dadurch gekennzeichnet, daß der sphärische holographische Spiegel (3) einen Krümmungsradius (R) in der Größenordnung von 160 mm hat und die Kollimation in einer Pupillenzone (P1) mit einem Durchmesser von etwa 15 mm erzeugt.

4. Head-Up-Display nach einem der vorhergehenden Ansprüche, dadurch gekennzeichnet, daß die Achsabweichung des sphärischen Spiegels bei etwa 15° liegt.

5. Head-Up-Display nach Anspruch 3 oder den Ansprüchen 3 und 4, dadurch gekennzeichnet, daß das Auswertungsfeld, das der Sicht des kollimierten Bildes entspricht, kreisförmig ist und etwa ±20° beträgt.
